# EUROPÄISCHE PATENTSCHRIFT

(11) **EP 1 283 405 B1**
(45) Veröffentlichungstag und Bekanntmachung des Hinweises auf die Patenterteilung: **27.08.2008**
(21) Anmeldenummer: 02014983.7
(22) Anmeldetag: 09.07.2002
(51) Int. Cl.: G01B 5/00, G01B 5/25, G01B 5/008

(54) **Montagelehre für Linearführungsschienen**
Mounting template for linear guide rails
Gabarit de montage pour barres de guidage linéaire

(30) Priorität: 09.08.2001 DE 10139080
(43) Veröffentlichungstag der Anmeldung: 12.02.2003
(73) Patentinhaber: Carl Zeiss Industrielle Messtechnik GmbH, 73447 Oberkochen (DE)
(72) Erfinder: Piwek, Volker, 28201 Bremen (DE); Walther, Jörg, 89547 Gerstetten (DE)
(74) Vertreter: Geyer, Fehners & Partner

(56) Entgegenhaltungen:
- DE-A1- 4 301 435
- US-A- 1 405 113
- US-A- 1 984 650
- US-A- 5 706 581
- PATENT ABSTRACTS OF JAPAN Bd. 1998, Nr. 03, 27. Februar 1998 (1998-02-27) -& JP 09 302602 A (SUGAWARA KOGYO KK), 25. November 1997 (1997-11-25)

## Beschreibung

Die Erfindung bezieht sich auf eine Montagelehre für lineare Führungsschienen mit einem Grundkörper, an dem in ihrer Lage zueinander genau ausgerichtete Referenzanlageflächen für mindestens zwei Führungsschienen angebracht sind, und mit an dem Grundkörper angebrachten Klemmeneinrichtungen zum Andrücken der Führungsschienen gegen jeweils eine der Referenzanlageflächen, wobei jeder Referenzanlageffäche eine Klemmeinreichtung zugeordnet ist, die zwischen einer Offenstellung, in der die zugeordnete Führungsschiene frei an diese Referenzanlagefläche des Grundkörpers anlegbar oder von dieser entfernbar ist, und einer Schließstellung, in der die Führungsschienen in Anlage gegen die Referenzanlagefläche am Grundkörper verklemmbar sind, bewegbar ist.

Derartige Montagelehren werden in allen Bereichen, in denen Linearführungssysteme Anwendung finden, eingesetzt. Hervorzuheben ist vor allem das Gebiet der Präzisions-Meßgeräte, bei denen es auf eine hochpräzise Anordnung der montierten Führungsschienen ankommt. Als ein Beispiel hierfür sei auf die Koordinatenmeßmaschinen verwiesen, die zur hochpräzisen Abtastung der Abmessungen von Gegenständen dienen. Daneben eignet sich die Erfindung auch besonders für die Montage von Linearführungsschienen an Produktions- und Werkzeugmaschinen mit hohen Genauigkeitsansprüchen, auch wenn dort die geforderte Grundgenauigkeit meist etwas geringer ist als bei Präzisions-Meßgeräten.

Zum Erzielen hoher Genauigkeiten, insbesondere im Hinblick auf Meßmaschinen, kommt der präzisen Positionierung und Ausrichtung von Führungsschienen zur Längsführung beweglicher Maschineneinrichtungen eine tragende Bedeutung zu.

Führungsschienen können prinzipiell frei auf einer Basis bzw. einem Grundgestell, z. B. einem Maschinenbett oder Maschinenfundament, montiert werden. Zum Positionieren und Ausrichten der Führungsschienen auf der Basis und auch zueinander ist es bekannt, dies mittels einer Meßuhr vorzunehmen. Beim Befestigen bzw. Verspannen der Führungsschienen auf der Basis durch mehrere, separate Befestigungs- bzw. Spannelemente, z.B. durch Spannbolzen oder Spannschrauben, kann es aber durch das Anziehen an einer Stelle zu geringfügigen Verschiebungen oder Verformungen an einer anderen Stelle der Führungsschienen kommen. Eine solche Vorgehensweise ist daher bei gesteigerten Anforderungen an die Genauigkeit der Positionierung sehr diffizil und zeitaufwendig. Zudem können solche Arbeiten nur von hierzu besonders geschulten Personen durchgeführt werden. Die letztlich erreichte Einstellung ist nicht reproduzierbar.

Zur Verbesserung der Genauigkeit der Positionierung und der Ausrichtung von Führungsschienen ist es aus dem Stand der Technik ferner bekannt, an der Basis, an der die Führungsschienen angebracht werden sollen, Schulteranschläge auszubilden, gegen welche die Führungsschienen angelegt und in dieser Lage mit der Basis verspannt werden. Die Genauigkeit der Positionierung und Ausrichtung der Führungsschienen hängt dabei in starkem Maße von der erreichbaren Lagegenauigkeit der Schulteranschläge zueinander ab. Insbesondere bei größeren Maschinen, beispielsweise bei Portalmeßmaschinen, ist aber eine hochpräzise Anfertigung solcher Schulteranschläge aus fertigungstechnischen Gründen meist schwierig und aufwendig. Oftmals müssen dann auch noch Einstellkeile o. ä. eingesetzt werden, um durch Nachjustage das für solche Meßmaschinen ausreichende Genauigkeitsniveau bei den verlegten Führungsschienen zu erreichen. Solche Justierungsmaßnahmen sind im allgemeinen relativ zeitaufwendig und schwierig.

Aus der DE 43 01 435 A1 ist ein sehr kompliziertes Verfahren zum Anbringen einer Linearführungsschiene auf einer Basiseinheit bekannt, bei dem eine Mehrzahl von voneinander beabstandeten Justierstellen eingesetzt wird, an denen durch geeignete Justiermittel die Linearführungsschiene einem vorgegebenen Sollverlauf angenähert und vorfixiert wird, wonach sie mit einem härtbaren Füllmittel umgossen und anschließend durch dessen Härten an der Basiseinheit fixiert wird. Dazu werden die Führungsschienen in eigenen gabelförmigen Endteilen formschlüssig gehaltert.

Aus der JP 09302602 A (Abstract) sind ebenso wie aus der US 1 405 113 Montagelehren entnehmbar, bei denen der Abstand der in einer Halteeinrichtung festgehaltenen Schienen mittels einer handbetätigten Spreizeinrichtung erst eingestellt wird, wenn die Schienen in seitlichen Halteeinrichtungen gehaltert sind. Dabei besteht die Halterungseinrichtung bei der Montagelehre aus der JP 09302602 A (Abstract) aus einem oberen U-förmigen Aufnahmeteil, in das der Kopf der betreffenden Schiene eingeführt wird, die dann durch ein einklappbares Halteteil, das die untere Schiene des Schienenkopfes formschlüssig blockiert, in der oberen U-förmigen Schiene gehalten wird. Das Einklappen des formschlüssiger Blockierteils muß bei beiden Schienen jedoch jeweils durch einen handhebelbetätigten Mechanismus vorgenommen werden, wonach dann mittels eines weiteren Drehhebels erst die eine der beiden gehalterten Schienen gegenüber der anderen über eine Verstellspindel soweit entfernt bzw. angenähert wird, bis der gewünschte Abstand erreicht ist.

In der US 1 405 113 sind zwar für beide Schienen bewegliche Klemmbacken vorgesehen, die aber jeweils über eine eigene Stellschraube zum Verklemmen verstellt werden müssen. Auch wird hier wieder, wenn die beiden Schienen eingeklemmt sind, der gewünschte Abstand zwischen ihnen durch die Betätigung eines Schwinghebels und einer zwischengeschalteten Zahnstange eingestellt.

Der Stand der Technik aus beiden Druckschriften beschreibt Montagelehren, die relativ kompliziert und umständlich zu bedienen sind und auch von der Bedienungsperson eine große Geschicklichkeit verlangen.

Bei der Montagelehre aus der US-A-5 706 581 werden die beiden Schienen nacheinander montiert und dabei jeweils mittels Klemmbacken über Stellschrauben an diesen manuell gegen eine Anlagefläche verspannt. Das Montieren und Ausrichten der Schienen nacheinander und deren manuelles Verspannen ist kompliziert und aufwendig und gestattet auch nicht das Erreichen einer definierten Einklemmkraft.

Eine Montagelehre der eingangs genannten Art ist aus der US 1 984 650 bekannt. Dabei wird ein Klemmbacken der Klemmeinrichtung mittels einer Drehspindel verstellt, was dort den ganzen Verspannvorgang jedoch außerordentlich umständlich und langwierig macht und zudem auch nicht ohne weiteres definierte Klemmverhältnisse herbeiführt. Dabei muß, um die beiden Schienen einzuklemmen, mittels einer an der Drehspindel angebrachten Handkurbel über eine Kurbelwelle erst die Klemmspannung (und zwar die zum Einklemmen beider Schienen) mittels eines durch die Kurbel axial verstellbaren Klemmbackens erzeugt und aufgebracht werden. Die Konstruktion dieser bekannten Montagelehre ist wiederum außerordentlich kompliziert und mechanisch sehr aufwendig, wobei die Klemmkraft stets so groß ist, wie sie von der Bedienungsperson gerade über das Einstellrad aufgebaut wird, so daß bei jedem Einsatzfall unterschiedliche Klemmkräfte wirken werden, die bei Führungsschienen, die hoch präzise verlegt werden müssen, durchaus zu unerwünschten Genauigkeitsabweichungen führen können.

Ausgehend hiervon liegt der Erfindung die Aufgabe zugrunde, eine gattungsgemäße Montagelehre so weiterzuentwickeln, daß die Durchführung der Montage deutlich vereinfacht und eine erhöhte Montagegenauigkeit für hochpräzise Linearführungssysteme bei sehr guter Reproduzierbarkeit der Einstellbedingungen erreicht werden kann.

Erfindungsgemäß wird diese Aufgabe bei einer Montagelehre der eingangs genannten Art dadurch gelöst, daß jede Klemmeinrichtung in Richtung auf ihre Schließstellung hin ständig so vorgespannt ist, daß bei Erreichen der Schließstellung bei eingelegten Führungsschienen eine voreinstellbare Klemmkraft auf diese wirkt.

Bevorzugt können dabei die Klemmeinrichtungen am Grundkörper verschwenkbar oder verschiebbar angebracht sein.

Die erfindungsgemäße Montagelehre gestattet eine außerordentlich präzise, trotzdem jedoch sehr einfach zu handhabende Montage der Führungsschienen. Dabei wird eine sehr rasche und präzise Lagefestlegung der Führungsschienen zueinander ohne irgendeine Einbuße an Genauigkeit erreicht, die auch von einer weniger geübten Person ausgeführt werden kann. Die Befestigung der Führungsschienen am Grundkörper wird in einem an der Montagelehre eingespannten Zustand der Führungsschienen vorgenommen, die somit durch den Befestigungsvorgang nicht in ihrer relativen Lage zueinander mehr verändert werden können. Dies erlaubt ein präzises Ausrichten und Anbringen der Führungsschienen, ohne daß es hierfür einer besonders geschulten Person bedürfte.

In einer vorteilhaften Ausgestaltung der Erfindung weist jede Klemmeinrichtung eine Anlagefläche für eine Führungsschiene auf, die der jeweils zugeordneten Referenzanlagefläche zugewandt ist und sich jeweils im wesentlichen über die gesamte Anlagefläche der Referenzanlagefläche in Längsrichtung der Führungsschiene erstreckt. Durch das Einspannen jeder Führungsschiene über die ganze Länge der Referenzanlagefläche hinweg läßt sich dort eine besonders genaue Lagefestlegung bei der Montage verwirklichen, die insbesondere auch beim späteren Befestigen der Führungsschienen an der Basis aufrechterhalten wird und so die Übertragung der Positions-und Ausrichtungsgenauigkeit, die an der Montagelehre erreicht wurde, auf das montierte Linearführungssystem erlaubt. Überdies erhält man dabei eine gleichmäßige Verteilung der Andruckkraft über den gesamten Befestigungsabschnitt entlang der Referenzanlagefläche, so daß im eingespannten Zustand überall etwa gleiche Spannungsverhältnisse herrschen.

Vorzugsweise umfaßt jede Klemmeinrichtung mehrere Spanneinrichtungen zur Erzeugung der Andruckkraft, die in Längsrichtung der Referenzanlagefläche (und damit der Führungsschienen) im Abstand voneinander, vorzugsweise gleich zueinander beabstandet, angeordnet sind. Hierdurch kann die Größe der Andruckkraft entlang der eingespannten Länge in einer gewünschten Verteilung aufgebracht werden, was aber auch eine besonders gleichmäßige Einstellung der Andruckkraft über die Einspannlänge hinweg zuläßt. Es besteht dabei auch die Möglichkeit, in Längsrichtung ein vorgegebenes Andruckkraftprofil mit örtlich unterschiedlichen Andruckkräften zu realisieren, falls dies in einem besonderen Einsatzfall von Vorteil sein sollte.

Zur weiteren Verbesserung bei der Einstellung örtlich individueller Andruckkraftzustände weist bei der erfindungsgemäßen Montagelehre jede Klemmeinrichtung vorzugsweise eine an dem Grundkörper gelagerte Spannpratze mit einer Anlagefläche für die zugeordnete Führungsschiene auf, wobei die Spannpratze im Bereich dieser Anlagefläche, in Längsrichtung der Referenzanlagefläche verteilt, mit senkrecht zur Längsrichtung verlaufenden Schlitzen zur Bildung von in Längsrichtung nebeneinander liegenden Spannpratzensegmenten versehen ist, an deren jedem eine Spanneinrichtung angreift. Damit kann für jedes Spannpratzensegment eine individuelle Einstellung seiner Vorspannkraft vorgenommen werden.

In Fortführung dieses Gedankens ist es besonders vorteilhaft, wenn die Schlitze jeweils an ihrem einen Ende offen sind, da hierdurch eine bessere strukturmechanische Entkopplung der Spannpratzensegmente erzielt wird, indem zwischen zwei benachbarten Schlitzen jeweils ein eigenständig verspannbares Spannpratzensegment gebildet wird.

Für eine besonders stabile Lagefestlegung der Führungsschiene an der erfindungsgemäßen Montagelehre empfiehlt es sich, deren Grundkörper mit einer im Vergleich zu den zu montierenden Führungsschienen um ein Mehrfaches, größeren Steifigkeit auszulegen, etwa um das Fünfzig-oder Hundertfache oder noch größer.

In einer weiteren vorteilhaften Fortgestaltung der Erfindung sind die Klemmeinrichtungen jeweils um eine Schwenkwelle verschwenkbar am Grundkörper gelagert, wodurch die Offenstellung sowie die Klemmstellung sehr rasch und einfach erreicht werden können.

Zur weiteren Vereinfachung der Montage können bei der erfindungsgemäßen Montagelehre die Klemmeinrichtungen jeweils mit einer Mehrzahl von Zugangsöffnungen versehen sein, die zur Lage der Spanneinrichtungen versetzt angebracht sind und in der Schließstellung zwischen diesen hindurch zu einer freien, nicht gegen die Montagelehre anliegenden Fläche der jeweiligen Führungsschiene führen. Damit können auch längere Abschnitte der Führungsschienen in die Montageebene eingespannt und im eingespannten Zustand an einer Vielzahl von Befestigungsstellen in engen Abständen mit der Basis verbunden werden, so daß die präzise Übertragung der Positions- und Ausrichtungsgenauigkeit von der Montagelehre auf das Linearführungssystem positiv unterstützt wird.

In einer weiteren, vorteilhaften Ausgestaltung der Erfindung umfaßt jede Spanneinrichtung einen Zuganker, mit dem das zugeordnete Spannpratzensegment mit dem Grundkörper verbunden und über den es mit dem Grundkörper zur Erzeugung der Andruckkraft verspannt wird. In einer anderen bevorzugten Ausführungsform sind zwei Klemmeinrichtungen auf zwei einander gegenüberliegenden Seiten der Montagelehre vorgesehen, wobei einander gegenüberliegende Spannpratzensegmente der Klemmeinrichtungen jeweils mittels eines ihnen gemeinsam zugeordneten Zugankers verbunden und über diesen miteinander zur Erzeugung der Andruckkräfte verspannt sind. Während die erste Variante besonders günstig für einem modulartigen Aufbau eines hinsichtlich des Abstandes der Führungsschienen variablen Grundkörpers ist, erlaubt die zweite Variante eine konstruktiv besonders einfache Lösung mit dem Vorteil einer Kraftkopplung über den Grundkörper hinweg, so daß sich an den verbundenen Stellen im wesentlichen etwa gleich große Andruckkräfte einstellen.

Die Vorspannung kann auf die Zuganker in jeder geeigneten Weise aufgebracht werden. Vorzugsweise ist der Zuganker aber an einem über das Spannpratzensegment vorstehenden Endbereich über ein federelastisches Spannelement gegen das Spannpratzensegment abgestützt, so daß dieses zu einem Austausch leicht zugänglich ist. Vorteilhafterweise erfolgt die Vorspannung des Spannelementes auf Druck. Als federelastische Spannelemente werden bevorzugt Druckfedern, z. B. Zylinderfedern aus Metall oder elastische Gummihülsen, eingesetzt.

Zur Vereinfachung der Anpassung der Andruckkraft weist in einer weiteren, vorteilhaften Ausgestaltung der Erfindung der Zuganker eine Einstelleinrichtung zur Veränderung bzw. Einstellung der Vorspannkraft des federelastischen Spannelementes auf.

In einer weiteren, vorteilhaften Ausgestaltung der erfindungsgemäßen Montagelehre sind die Klemmeinrichtungen jeweils mit einem Handgriff versehen, der jeweils relativ zu der Schwenkachse der Klemmeinrichtungen derart angeordnet ist, daß bei einem Ziehen am Handgriff die Andruckkraft der Klemmeinrichtungen gegen die Führungsschienen erhöht wird. Vorzugsweise ist dazu die Spannpratze als ein Schwenkhebel ausgebildet, der auf einer Seite der Montagelehre in einem Abstand zu der dort ausgebildeten Referenzanlagefläche über diese seitlich vorspringt und an seinem vorspringenden Endbereich U-förmig in Richtung auf die Referenzanlagefläche zurückläuft, wobei er an seinem freien Ende die Anlagefläche ausbildet, die der Referenzanlagefläche gegenüberliegt. Hierdurch wird ein sicherer Transport der Führungsschienen an der Montagelehre, der sowohl manuell wie auch in einer automatisierten Fertigungslinie erfolgen kann, gewährleistet.

Die Erfindung wird nachfolgend anhand der Zeichnung im Prinzip beispielshalber noch näher erläutert. Es zeigen:
- Fig. 1:: eine Perspektivdarstellung eines Ausführungsbeispiels einer erfindungsgemäßen Montagelehre für Linearführungsschienen;
- Fig. 2:: eine Schnittdarstellung durch die Montagelehre aus Fig. 1 längs Schnittlage IIII in Fig. 1, und
- Fig. 3:: eine Prinzipdarstellung (Draufsicht) auf eine erfindungsgemäße Montagelehre mit zwei eingespannten Führungsschienen zur Veranschaulichung der Spannreihenfolge bei der Befestigung der Führungsschienen an der Basis.

Die in den Figuren dargestellte Montagelehre 1 ist zur Aufnahme von zwei parallelen linearen Führungsschienen 2 ausgelegt, die Teil eines Präzisions-Linearführungssystems einer im Detail nicht weiter gezeigten Portal-Koordinatenmeßmaschine sind.

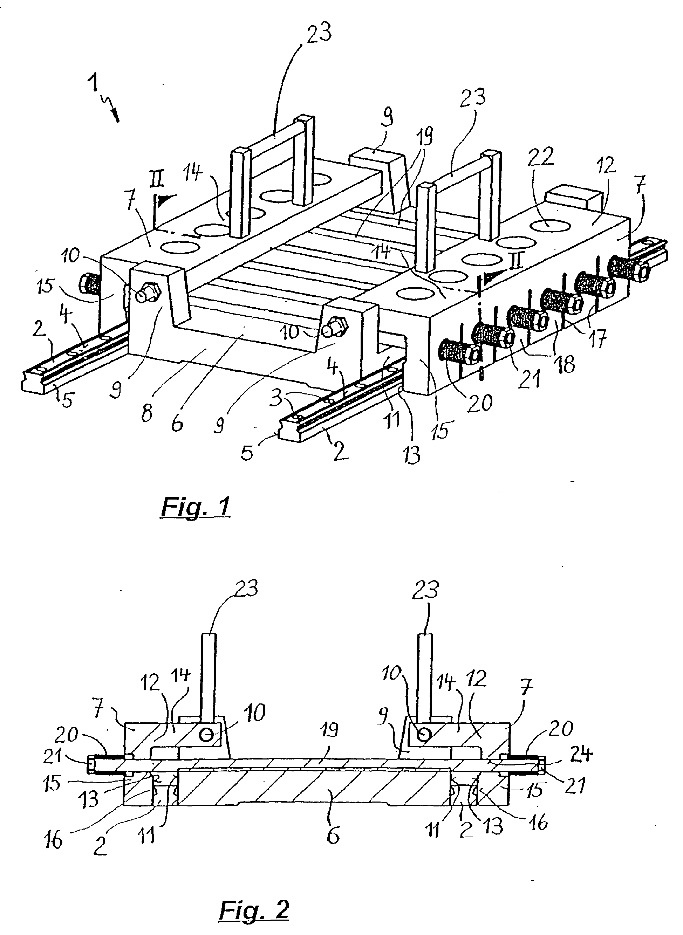

Wie aus Fig. 1 ersichtlich, ist jede Führungsschiene 2 mit geeigneten Führungsflächen versehen und weist im dargestellten Ausführungsbeispiel eine Vielzahl von in Längsrichtung der Führungsschiene 2 hintereinander angeordneten Durchgangsöffnungen 3 als Befestigungsstellen auf, die in regelmäßigen Abständen angebracht sind. Diese Durchgangsöffnungen 3 dienen zur Befestigung der Führungsschienen 2 an einer (nicht näher dargestellten) Basis, z. B. einem Maschinenbett oder -fundament der Koordinatenmeßmaschine, auf dem zu diesem Zweck ein entsprechendes Bohrbild vorgesehen ist. Zur Befestigung werden (nicht gezeigte) Spannbolzen oder Spannschrauben eingesetzt, deren Köpfe im montierten Zustand in den Führungsschienen 2 versenkt aufgebracht sein sollen. Beidseits der mit den Durchgangsöffnungen 3 versehenen Schienenoberfläche 4 weisen die Führungsschienen 2 profilierte seitliche Flanken 5 auf, denen die eigentliche Führungsfunktion zukommt.

Die Montagelehre 1 umfaßt einen massiven, steifen Grundkörper 6 sowie an diesem gelagerte Klemmeinrichtungen 7, von denen in dem gezeigten Ausführungsbeispiel zwei an einander gegenüberliegenden Seiten des Grundkörpers 6 vorgesehen sind, so daß sich bezüglich einer Mittelebene des Grundkörpers 6 eine symmetrische Anordnung ergibt.

Der Grundkörper 6 wird durch eine im wesentlichen flache Platte 8 gebildet, die eine große strukturelle Steifigkeit gegen auf ihren Außenrand wirkende Druckkräfte aufweist. Insbesondere beträgt ihre Steifigkeit ein Vielfaches der Steifigkeit der Führungsschienen 2, in gleicher Belastungsrichtung gesehen, um die Verformungen an dem Grundkörper 6 bei einem Verspannen der Führungsschienen 2 gegen denselben so gering wie möglich zu halten. Bei dem gezeigten Ausführungsbeispiel ist die Dicke der Platte 8 etwas größer als die Höhe der Führungsschienen 2.

Daneben weist der Grundkörper 6 an seinen seitlichen Endbereichen nach oben gerichtete Lagervorsprünge 9 in Form von Verdickungen auf, die der Lagerung einer später noch näher zu beschreibenden Schwenkwelle 10 dienen. Diese Vorsprünge 9 sind hier einstückig mit dem Grundkörper 6 ausgebildet, der vorzugsweise als Gußteil hergestellt ist.

Weiterhin sind an dem Grundkörper 6 in ihrer Lage zueinander genau festgelegte und definierte Referenzanlageflächen 11 zur Anlage der seitlichen Flanken 5 der Führungsschienen 2 ausgebildet. In dem beschriebenen Ausführungsbeispiel sind an beiden Seiten des Grundkörpers 2 Referenzanlageflächen 11 vorgesehen, die mit sehr hoher Präzision gearbeitet sind und eine ausgezeichnete Parallelität zueinander aufweisen, da über diese Flächen die Positionierung und Ausrichtung der Führungsschienen 2 zueinander erfolgt.

Die an dem Grundkörper 6 gelagerten Klemmeinrichtungen 7 dienen dem Andrücken der Führungsschienen 2 gegen die Referenzanlageflächen 11. Dabei sind die Klemmeinrichtungen 7 jeweils zwischen einer (nicht dargestellten) Offenstellung, in der jede Führungsschiene 2 frei an die zugeordnete Referenzanlagefläche 11 des Grundkörpers 6 angelegt oder von dieser bzw. dem Grundkörper 6 entkoppelt werden kann, und einer Klemmstellung, in der die jeweilige Führungsschiene 2 in definierter Lage an dem Grundkörper 6 gehalten wird, bewegbar. Diese Klemmstellung ist gut aus Fig. 2 erkennbar, in der eine Schnittdarstellung längs II-II durch die Montagelehre aus Fig. 1 wiedergegeben ist.

Zu diesem Zweck weisen die Klemmeinrichtungen 7 jeweils eine Anlagefläche 13 zur Anlage gegen eine Flanke 5 einer Führungsschiene 2 auf (Fig. 2). Diese Anlagefläche 13 ist der zugeordneten Referenzanlagefläche 11 zugewandt und erstreckt sich im wesentlichen über die gesamte Anlagelänge derselben in Längsrichtung der betreffenden Führungsschiene 2, so daß ein durchgehendes Einspannen eines Abschnittes der Führungsschiene 2 in der Montagelehre 1 möglich ist.

In dem dargestellten Ausführungsbeispiel weist jede Klemmeinrichtung 7 eine an dem Grundkörper 6 verschwenkbar angebrachte Spannpratze 12 auf, an der die Anlagefläche 13 für die Führungsschiene 2 ausgebildet ist. Dazu ist eine zwischen allen Lagervorsprüngen 9 parallel zu der Referenzanlagefläche 11 verlaufende Schwenkwelle 10 vorgesehen, die an jedem ihrer beiden Endabschnitte verschwenkbar jeweils in einem der Lagervorsprünge 9 gelagert ist und deren Längsmittellinie die Schwenkachse bildet.

Die Spannpratze 12 selbst ist als Schwenkhebel mit einem winkelförmigen Querschnittsprofil, vorzugsweise einem im wesentlichen L-förmigen-Profil, ausgebildet (Fig. 2). Die Schwenkwelle 10 liegt dabei im Endbereich eines Schenkels 14 dieses Profils, wogegen die Anlagefläche 13 am freien Ende des anderen, in seinem Endbereich U-förmig abgeknickten Schenkels 15 angeordnet ist und an einem von der Schenkelbasis in Richtung zur zugeordneten Referenzanlagefläche 11 hin zurückspringenden Anlageabschnitt 16 liegt, wie dies in Fig. 2 gezeigt ist, auf deren Darstellung ausdrücklich als wesentlich verwiesen sei. In Klemmstellung stehen sich die Anlageflächen 11 und 13 parallel gegenüber, so daß eine senkrechte Krafteinleitung in die Flanken 5 einer dazwischen angeordneten und einzuspannenden Führungsschiene 2 erfolgen kann.

Die Spannpratze 12 ist ferner im Bereich der Anlagefläche 13 in Längsrichtung der Führungsschiene 2 durch schmale Schlitze 17 (Fig. 1) unterbrochen, die sich hier lediglich im Bereich des abgeknickten Schenkels 15 erstrecken und jeweils zu einem Ende desselben hin offen sind. Durch die Schlitze 17 wird dieser Schenkel 15 in einzelne Spannpratzensegmente 18 aufgeteilt, die in Längsrichtung nebeneinander und senkrecht zur Längsachse der Schwenkwelle 10 liegen. Die einzelnen Spannpratzensegmente 18 bleiben jedoch an ihrer Basis über den in der Zeichnung horizontal dargestellten oberen Schenkel 14 miteinander verbunden. Da die Schlitze 17 sehr schmal ausgebildet sind, bleiben die Vorteile einer quasi durchgehenden gleichmäßigen Einspannung erhalten, jedoch können die einzelnen Segmente 18 unabhängig voneinander belastet werden.

Die Klemmeinrichtungen 7 sind jeweils in Richtung zur zugeordneten Referenzanlagefläche 11 des Grundkörpers 6 mit einer einstellbaren Andruckkraft vorgespannt, so daß sich die Spannpratzen 12 automatisch in die Klemmstellung bewegen, wenn sie nicht speziell in ihrer Offenstellung gehalten werden, um eine Führungsschiene 2 zu erfassen oder von einer solchen die Montagelehre 1 abzukoppeln. In dem dargestellten Ausführungsbeispiel weisen die Klemmeinrichtungen 7 jeweils mehrere Spanneinrichtungen zum Aufbringen einer Vorspannkraft bzw. Klemm- oder Andruckkraft auf. Die Spanneinrichtungen sind dabei in Längsrichtung der Führungsschienen 2 hintereinander, vorzugsweise in gleichen Abständen hintereinander, angeordnet, wobei an jedem Spannpratzensegment 18 eine eigene Spanneinrichtung angreift. Dabei umfassen die Spanneinrichtungen federelastische Spannelemente 20, für deren Ausbildung alle geeigneten Federn eingesetzt werden können, die je nach Anordnung auf Druck oder Zug vorbelastet eingebaut sind.

In dem dargestellten Ausführungsbeispiel umfaßt jede Spanneinrichtung einen stabartigen Zuganker 19 (Fig. 2), mit dem hier zwei einander gegenüberliegende Spannpratzensegmente 18 zweier Klemmeinrichtungen 7 verbunden werden, wobei sich der gemeinsame Zuganker 19 quer über den Grundkörper 6 erstreckt. In den Spannpratzensegmenten 18 sind im Bereich des auf eine Befestigungsfläche der Basis hin abgeknickten Schenkels 15 zwischen den Schlitzen 17 entsprechende Durchgangsöffnungen 24 vorgesehen, durch die hindurch der jeweils zugeordnete Zuganker 19 verläuft. Dabei ist jeder Zuganker 19 an seinem (bzw. seinen) über das jeweilige Spannpratzensegment 18 überstehenden Endbereich(en) jeweils über ein federelastisches Spannelement 20 gegen die Außenseite des betreffenden Spannpratzensegmentes 18 abgestützt. Das federelastische Spannelement 20, beispielsweise eine Zylinderfeder oder eine Gummihülse, ist auf Druck vorgespannt.

Zur individuellen Einstellung der Vorspannkraft bzw. der Andruckkraft an den einzelnen Spannpratzensegmenten 18 weist der zugeordnete Zuganker 19 eine Einstelleinrichtung zur Veränderung der Vorspannkraft des federelastischen Spannelementes 20 auf. In dem gezeigten Ausführungsbeispiel erfolgt die Einstellung jeweils durch eine auf das betreffende Ende des Zugankers 19 aufgeschraubte Stellmutter 21, die als Anschlag für die federelastischen Spannelemente 20 dient. Durch Einschrauben der Stellmutter 21 wird das jeweilige federelastische Spannelement 20 stärker komprimiert und damit die Vorspannung bzw. Andruckkraft erhöht. Die Anordnung der Einstelleinrichtung ist jedoch nicht auf die dargestellte Verwendung von Stellmuttern oder deren Anordnung an einem oder beiden Enden einer Zugstange 19 beschränkt. Vielmehr könnte eine Einstellung z. B. auch im Mittelbereich des Zugankers 19 zwischen den Spannpratzen 12 erfolgen, indem dort z.B. eine Verstelleinrichtung zum Ändern der Gesamtlänge desselben vorgesehen ist (in den Figuren nicht dargestellt). So ist z. B. eine Hülsenanordnung bei einem zweigeteilten Zuganker möglich, bei dem ein Zugankerabschnitt mit einem Außengewinde in ein Innengewinde eines zweiten Zugankerabschnitts eingreift, wobei beide Zugankerabschnitte gemeinsam den gesamten Zuganker 19 bilden.

In einer weiteren, ebenfalls nicht dargestellten Ausführungsform ist mindestens ein Spannpratzensegment 18 mittels seines zugeordneten Zugankers 19 mit dem Grundkörper 6 verbunden und über diesen Zuganker 19 mit dem Grundkörper 6 zur Erzeugung der Vorspannkraft verspannt.

Zur Befestigung einer an der Montagelehre 1 gehaltenen Führungsschiene 2 an einer (nicht dargestellten) Basis mittels Spannbolzen oder -schrauben o.ä. weist die Klemmeinrichtung 7 eine Vielzahl von Zugangsöffnungen 22 auf, die zu den Zugankern 19 versetzt angebracht und in der Klemmstellung zwischen den Zugankern 19 hindurch zu der freien, nicht gegen die Montagelehre 1 anliegenden Oberfläche 4 der jeweils gehalterten Führungsschiene 2 führen, um so für ein Spannwerkzeug einen ungehinderten Zugang zu den Durchgangsbohrungen 3 der Führungsschiene 2 zum Anziehen der entsprechenden Befestigungselemente zu gewährleisten. Die Zugangsöffnungen 22 sind dabei in dem horizontal liegenden Schenkel 14 der Spannpratze 12 jeweils senkrecht zur Drehachse derselben und parallel zur Ausrichtung der Schlitze 17 angeordnet.

Weiterhin sind die Klemmeinrichtungen 7 mit Handgriffen 23 versehen, die an den Spannpratzen 12 angreifen und zum manuellen und/oder maschinellen Ergreifen ausgebildet sind. Mit den Handgriffen können die Klemmeinrichtungen 7 entgegen der Vorspann- bzw. Andruckkraft geöffnet werden.

Die Anordnung eines Handgriffs 23 an einer Spannpratze 12 erfolgt vorzugsweise auf der zur Mitte des Grundkörpers 6 hin liegenden Seite der Schwenkwelle 10, wogegen die Anlagefläche 13 für die Führungsschienen 2 auf der bezüglich der Schwenkwelle 10 anderen Seite der Spannpratze 12 vorgesehen ist. Ergreift man nun die Montagelehre 1 an den Handgriffen 23, dann unterstützt das Eigengewicht der Montagelehre 1 die Andruckkraft der Klemmeinrichtungen 7 gegen die Führungsschienen 2, wodurch beim Anheben der Montagelehre 1 mit an ihr verspannten Führungsschienen 2 deren Halterung an der Montagelehre 1 noch verstärkt wird, dabei also eine "selbsthaltende" Anordnung erreicht wird.

In einer nicht dargestellten Abwandlung kann die Breite des Grundkörpers 6 quer zu den Führungsschienen 2 variierbar ausgebildet werden, um die Montagelehre 1 universal für verschiedene Führungsschienenabstände und Führungstypen und -größen einzusetzen. Hierzu könnte z. B. der Grundkörper 6 in Längrichtung geteilt und durch Einfügen von Einsatzstücken verbreitert werden, wodurch sich ein modulartiges Montagelehrensystem ergibt.

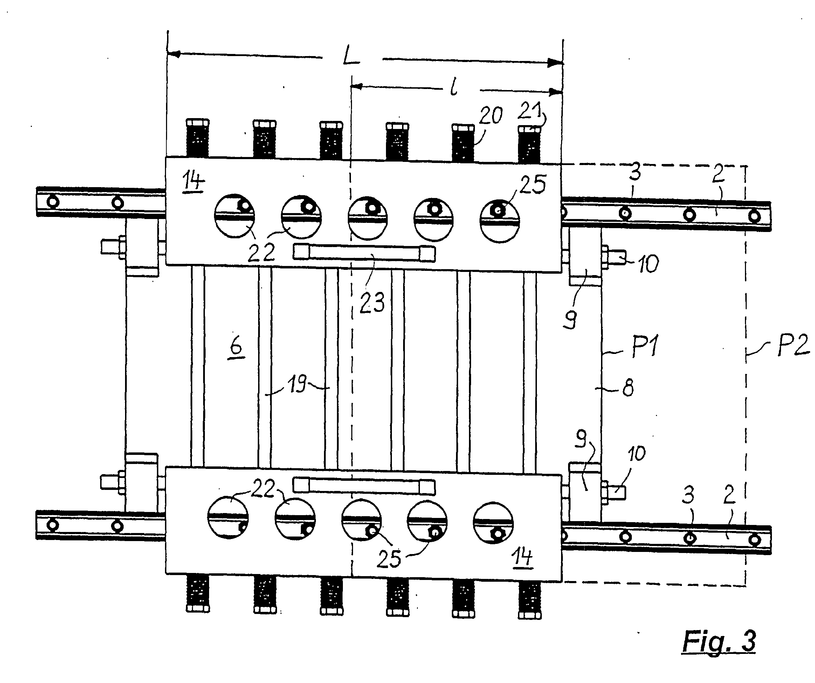

Im folgenden wird nun kurz (in Verbindung mit Fig. 3) eine Montage von Präzisions-Linearführungsschienen 2 mittels der vorstehend erläuterten Montagelehre 1 beschrieben:

Zur Befestigung der Führungsschienen 2 in zueinander genau definierter Ausrichtung an einer Basis werden die Führungsschienen 2 zunächst jeweils längs eines Abschnitts ihrer Länge an den Referenzanlageflächen 11 der Montagelehre 1 zur Anlage gebracht (Fig. 3, durchgezogene Darstellung). Hierzu werden die Spannpratzen 12 um die Schwenkwelle 10 nach außen in die Offenstellung geschwenkt (in Fig. 3 nicht dargestellt), so daß die Montagelehre 1 beschickt oder über die noch nicht genau ausgerichteten Führungsschienen 2 übergestülpt werden kann. Mit dem Schließen der Spannpratzen 12, das bei einem Loslassen der Handgriffe 23 aufgrund der Vorspannung der Spannpratzen 12 selbsttätig erfolgt, werden die Führungsschienen 2 durch die Anlageflächen 11 und gegebenenfalls weitere Positionsfestlegungselemente entlang ihrer in die Montagelehre 1 eingelegten Abschnitte zueinander positioniert und ausgerichtet. Diese Lage ist in Fig. 3 als Position P1 angegeben.

Anschließend werden die Führungsschienen 2 im Bereich ihrer Einspannung an der Montagelehre 1 fest mit der Basis verbunden. Hierzu werden einzelne Befestigungsstellen 3 der Führungsschienen 2 entsprechend zugeordnete Befestigungselemente 24 im Bereich der Einspannung mittels eines durch die Zugangsöffnungen 22 der Spannpratzen 12 eingeführten (nicht gezeigten) Werkzeuges bestätigt. Als Werkzeug kann beispielsweise ein Steckschlüssel verwendet werden.

Dabei werden die Befestigungselemente 24 im Bereich der Einspannung von der Mitte des eingespannten Bereiches aus nach außen hin nacheinander angezogen. Bei mehreren Führungsschienen 2 (wie in Fig. 3 für zwei Führungsschienen 2 gezeigt) erfolgt das Anziehen der Befestigungselemente 24 wechselseitig zwischen den verschiedenen Führungsschienen 2. Dabei kann in jeder gewünschten Weise das wechselseitige Anziehen der Befestigungelemente 24 erfolgen, jedoch sollte die grundsätzliche Reihenfolge von der Mitte des eingespannten Bereiches aus nach außen beibehalten werden.

Nach dem Anziehen sämtlicher Befestigungselemente 24 im eingespannten Abschnitt der Führungsschienen 2 wird die Montagelehre 1 von den Führungsschienen 2 durch Öffnen der Spannpratzen 12 entkoppelt und kann unter Zurücklassen der nunmehr an der Basis befestigten Führungsschienen 2 entfernt werden.

Bei längeren Führungsschienen wird die Montagelehre 1 nach dem Befestigen der ersten Einspannabschnitte der Führungsschienen 2 an der Basis und nach dem Entkoppeln um eine definierte Strecke in Längsrichtung der Führungsschienen 2 versetzt, um andere Abschnitte der Führungsschienen 2 an den Referenzanlageflächen 11 der Montagelehre 1 in eine genau definierte Lage zueinander zu bringen und danach wieder in der bereits beschriebenen Art und Weise mit ihr zu verspannen. Anschließend werden die Führungsschienen 2 im Bereich der Einspannung an der Montagelehre 1 wieder fest mit der Basis verbunden und hiernach die Montagelehre 1 von den Führungsschienen 2 entkoppelt. Dieser Vorgang wird wiederholt, bis an allen Befestigungsstellen 3 jeder Führungsschiene 2 eine Befestigung an der Basis erfolgt ist, wie dies in Fig. 3 anhand einer solchen weiteren versetzten Position P2 angedeutet ist. Dabei sollte zwischen einem bereits befestigten Abschnitt und einem noch zu verspannenden Befestigungsabschnitt eine Überlappungslänge I eingehalten werden, wie dies in Fig. 3 zwischen den Positionen P1 und P2 gezeigt ist. Eine Überlappungslänge I in der Größenordnung der halben Einspannlänge L hat sich dabei als günstig erwiesen.

Grundsätzlich besteht auch die Möglichkeit, die Klemmeinrichtungen 7 z. B. hydraulisch zu betätigen, was bei bestimmten Einsatzfällen von Vorteil sein kann.

Die geschilderte Montage läßt sich auch gut teil- oder vollautomatisiert durchführen und bietet eine vorzügliche Reproduzierbarkeit des Montageprozesses.

## Patentansprüche

1. Montagelehre (1) für lineare Führungsschienen (2), mit einem Grundkörper (6), an dem in ihrer Lage zueinander genau ausgerichtete Referenzanlageflächen (11) für mindestens zwei Führungsschienen (2) angebracht sind, und mit an dem Grundkörper (6) angebrachten Klemmeinrichtungen (7) zum Andrücken der Führungsschienen (2) gegen jeweils eine der Referenzanlageflächen (11), wobei jeder Referenzanlagefläche (11) eine Klemmeinrichtung (7) zugeordnet ist, die zwischen einer Offenstellung, in der die zugeordnete Führungsschiene (2) frei an diese Referenzanlagefläche (11) des Grundkörpers (6) anlegbar oder von dieser entfernbar ist, und einer Schließstellung, in der die Führungsschienen (2) in Anlage gegen die Referenzanlagefläche (11) am Grundkörper (6) verklemmbar sind, bewegbar ist, **dadurch gekennzeichnet, daß** jede Klemmeinrichtung (7) in Richtung auf ihre Schließstellung hin ständig so vorgespannt ist, daß bei Erreichen der Schließstellung bei eingelegten Führungsschienen (2) eine voreinstellbare Klemmkraft auf diese wirkt.

2. Montagelehre (1) nach Anspruch 1, **dadurch gekennzeichnet, daß** die Klemmeinrichtungen (7) verschwenkbar oder verschiebbar am Grundkörper (6) angebracht sind.

3. Montagelehre (1) nach Anspruch 1 oder 2, **dadurch gekennzeichnet, daß** jede Klemmeinrichtung (7) eine Anlagefläche (13) für die zugeordnete Führungsschiene (2) aufweist, die der jeweils zugeordneten Referenzanlagefläche (11) zugewandt ist und sich im wesentlichen über die gesamte Anlagefläche der Referenzanlagefläche (11) in Längsrichtung der Führungsschiene (2) erstreckt.

4. Montagelehre (1) nach einem der Ansprüche 1 bis 3, **dadurch gekennzeichnet, daß** jede Klemmeinrichtung (7) mehrere Spanneinrichtungen zur Erzeugung der Andruckkraft umfaßt, die in Längsrichtung der Referenzanlagefläche (11) im Abstand voneinander, vorzugsweise gleich beabstandet zueinander, angeordnet sind.

5. Montagelehre (1) nach einem der Ansprüche 1 bis 4, **dadurch gekennzeichnet, daß** jede Klemmeinrichtung (7) eine am Grundkörper (6) gelagerte Spannpratze (12) mit einer Anlagefläche (13) für die zugeordnete Führungsschiene (2) aufweist, wobei die Spannpratze (12) im Bereich der Anlagefläche (13) in Längsrichtung der Referenzanlagefläche (11) verteilt mit senkrecht zur Längsrichtung verlaufenden Schlitzen (17) zur Bildung von nebeneinander liegenden Spannpratzensegmenten (18) versehen ist, an deren jedem Spannpratzensegment (18) eine Spanneinrichtung angreift.

6. Montagelehre (1) nach Anspruch 5, **dadurch gekennzeichnet, daß** die Schlitze (17) jeweils an ihrem einen Ende offen sind.

7. Montagelehre (1) nach einem der Ansprüche 1 bis 6, **dadurch gekennzeichnet, daß** der Grundkörper (6) eine um ein Mehrfaches, etwa um das fünfzig- oder hundertfache, größere Steifigkeit als die zu montierenden Führungsschienen (2) aufweist.

8. Montagelehre (1) nach einem der Ansprüche 1 bis 7, **dadurch gekennzeichnet, daß** die Klemmeinrichtungen (7) jeweils über eine Schwenkwelle (10) verschwenkbar am Grundkörper (6) gelagert sind.

9. Montagelehre (1) nach einem der Ansprüche 1 bis 8, **dadurch gekennzeichnet, daß** die Klemmeinrichtungen (7) jeweils eine Mehrzahl von Zugangsöffnungen (22) aufweisen, die zur Lage der Spanneinrichtungen versetzt abgebracht sind und in der Schließstellung zwischen diesen hindurch zu einer freien, nicht gegen die Montagelehre anliegenden Fläche (4) der jeweiligen Führungsschiene (2) führen.

10. Montagelehre (1) nach einem der Ansprüche 5 bis 9, **dadurch gekennzeichnet, daß** jede Spanneinrichtung einen Zuganker (19) umfaßt, mit dem das zugeordnete Spannpratzensegment (18) mit dem Grundkörper (6) verbunden und über den (19) es mit dem Grundkörper (6) zur Erzeugung der Andruckkraft verspannt ist.

11. Montagelehre (1) nach einem der Ansprüche 5 bis 9, **dadurch gekennzeichnet, daß** zwei Klemmeinrichtungen (7) auf zwei einander gegenüberliegenden Seiten der Montagelehre vorgesehen sind und einander gegenüberliegende Spannpratzensegmente (18) der Klemmeinrichtungen (2) jeweils mittels eines ihnen gemeinsam zugeordneten Zugankers (19) verbunden sowie über diesen (19) miteinander zur Erzeugung der Andruckkräfte verspannt sind.

12. Montagelehre (1) nach Anspruch 10 oder 11, **dadurch gekennzeichnet, daß** der Zuganker (19) über ein federelastisches Spannelement (20) der Spanneinrichtung gegen das Spannpratzensegment (18) abgestützt ist.

13. Montagelehre (1) nach Anspruch 12, **dadurch gekennzeichnet, daß** das federelastische Spannelement eine Druckfeder (20) ist.

14. Montagelehre (1) nach einem der Ansprüche 10 bis 13, **dadurch gekennzeichnet, daß** der Zuganker (19) mit einer Einstelleinrichtung (21) zur Einstellung der Vorspannkraft des federelastischen Spannelementes (20) versehen ist.

15. Montagelehre(1) nach einem der Ansprüche 8 bis 14, **dadurch gekennzeichnet, daß** jede Klemmeinrichtung (7) mit einem Handgriff (23) versehen ist, der jeweils relativ zu der Schwenkwelle (10) derart angeordnet ist, daß bei einem Ziehen an dem Handgriff (23) die Andruckkraft der Klemmeinrichtung (7) gegen die Führungsschienen (2) erhöht wird.

16. Montagelehre (1) nach einem der Ansprüche 8 bis 15, **dadurch gekennzeichnet, daß** die Spannpratze (12) als ein Schwenkhebel ausgebildet ist, der auf einer Seite der Montagelehre (1) in einem Abstand zu der dort ausgebildeten Referenzanlagefläche (11) über diese seitlich vorspringt und an seinem vorspringenden Ende U-förmig in Richtung auf die Referenzanlagefläche (11) zurückläuft, wobei er an seinem freien Ende die Anlagefläche (13) ausbildet, die der Referenzanlagefläche (11) gegenüberliegt.

## Claims

1. Mounting guide (1) for linear guide rails (2), comprising a base body (6) on which reference locating surfaces (11) accurately aligned in their position relative to one another for at least two guide rails (2) are arranged, and clamping devices (7) mounted on the base body (6) for pressing each of the guide rails (2) against one of the reference locating surfaces (11), wherein allocated to each reference locating surface (11) is a clamping device (7) which can be moved between an open position in which the associated guide rail (2) can be freely laid on this reference locating surface (11) of the base body (6) or can be removed therefrom, and a closed position in which the guide rails (2) are clampable in contact with reference locating surface (11) on the base body (6), **characterised in that** each clamping device (7) is constantly pretensioned in the direction towards its closed position such that, on reaching the closed position with the guide rails (2) inserted, a presettable clamping force acts thereon.

2. Mounting guide (1) according to claim 1, **characterised in that** the clamping devices (7) are mounted pivotably or displaceably on the base body (6).

3. Mounting guide (1) according to claim 1 or 2, **characterised in that** each clamping device (7) has a locating surface (13) for the allocated guide rail (2) which faces towards the respective allocated reference locating surface (11) and extends substantially over the whole locating surface of the reference locating surface (11) in the longitudinal direction of the guide rail (2).

4. Mounting guide (1) according to one of the claims 1 to 3, **characterised in that** each clamping device (7) comprises a plurality of tensioning devices to generate the pressing force, said tensioning devices being spaced apart from one another in the longitudinal direction of the reference locating surface (11), preferably equally spaced from one another.

5. Mounting guide (1) according to one of the claims 1 to 4, **characterised in that** each clamping device (7) comprises a tensioning claw (12) mounted on the base body (6) with a locating surface (13) for the associated guide rail (2), wherein the tensioning claw (12) is provided in the region of the locating surface (13) with slits (17) arranged distributed in the longitudinal direction of the reference locating surface (11) and running perpendicularly to the longitudinal direction to form tensioning claw segments (18) lying adjoining one another, on each tensioning claw segment (18) of which a tensioning device engages.

6. Mounting guide (1) according to claim 5, **characterised in that** the slits (17) are each open at one end.

7. Mounting guide (1) according to one of the claims 1 to 6, **characterised in that** the base body (6) has a stiffness that is several times, approximately in the range of fifty or one hundred times, greater than the rails (2) to be mounted.

8. Mounting guide (1) according to one of the claims 1 to 7, **characterised in that** the clamping devices (7) are each mounted on the base body (6) pivotable by means of a pivot shaft (10).

9. Mounting guide (1) according to one of the claims 1 to 8, **characterised in that** the clamping devices (7) each have a plurality of access apertures (22) which are mounted offset from the position of the tensioning devices and, in the closed position lead between them and through them to a free surface (4) of the respective guide rail (2) not lying against the mounting guide.

10. Mounting guide (1) according to one of the claims 5 to 9, **characterised in that** each tensioning device comprises a tie rod (19) with which the associated tensioning claw segment (18) is connected to the base body (6), by means of which tie rod (19) it is tensioned against the base body (6) to create the pressing force.

11. Mounting guide (1) according to one of the claims 5 to 9, **characterised in that** two clamping devices (7) are provided on two mutually opposing sides of the mounting guide and mutually opposing tensioning claw segments (18) of the clamping devices (2) are connected by means, in each case, of a tie rod (19) allocated to them jointly and are tensioned against one another by said tie rod (19) to create the pressing forces.

12. Mounting guide (1) according to claim 10 or 11, **characterised in that** the tie rod (19) is supported via an elastically sprung tensioning element (20) of the tensioning device against the tensioning claw segment (18).

13. Mounting guide (1) according to claim 12, **characterised in that** the elastically sprung tensioning element is a compression spring (20).

14. Mounting guide (1) according to one of the claims 10 to 13, **characterised in that** the tie rod (19) is provided with an adjusting device (21) for adjusting the pretensioning force of the elastically sprung tensioning device (20).

15. Mounting guide (1) according to one of the claims 8 to 14, **characterised in that** each clamping device (7) is provided with a handle (23) which is arranged relative to the pivot shaft (10) such that, when the handle (23) is pulled, the pressing force of the clamping device (7) against the guide rails (2) is increased.

16. Mounting guide (1) according to one of the claims 8 to 15, **characterised in that** the tensioning claw (12) is configured as a pivot lever which projects laterally on one side of the mounting guide (1) at a distance from and over the reference locating surface (11) formed there and, at its projecting end, returns in a U-shape in the direction towards the reference locating surface (11), wherein, at its free end, it forms the locating surface (13) which lies opposing the reference locating surface (11).

## Revendications

1. Gabarit de montage (1) pour des rails de guidage (2) linéaires, comportant un corps de base (6), sur lequel sont réalisées des surfaces d'appui de référence (11) pour au moins deux rails de guidage (2), lesquelles sont orientées exactement l'une par rapport à l'autre dans leur position, et comportant des dispositifs de blocage (7), montés sur le corps de base (6) et destinés à presser chacun des rails de guidage (2) contre une des surfaces d'appui de référence (11), un dispositif de blocage (7) étant associé à chaque surface d'appui de référence (11), qui est mobile entre une position d'ouverture, dans laquelle le rail de guidage (2) associé peut être librement mis en appui contre cette surface d'appui de référence (11) du corps de base (6) ou être éloigné de celle-ci, et une position de fermeture, dans laquelle les rails de guidage (2) peuvent être bloqués en appui contre la surface d'appui de référence (11) sur le corps de base (6), **caractérisé en ce que** chaque dispositif de blocage (7) est en permanence précontraint en direction de sa position de fermeture, de telle sorte que, lorsque la position de fermeture est atteinte avec des rails de guidage (2) insérés, une force de blocage préréglable soit exercée sur ces derniers.

2. Gabarit de montage (1) selon la revendication 1, **caractérisé en ce que** les dispositifs de blocage (7) sont montés sur le corps de base (6) de manière à pouvoir pivoter ou à se déplacer en translation.

3. Gabarit de montage (1) selon la revendication 1 ou 2, **caractérisé en ce que** chaque dispositif de blocage (7) comporte une surface d'appui (13) pour le rail de guidage (2) associé, laquelle est orientée vers la surface d'appui de référence (11) chaque fois associée et s'étend sensiblement sur toute la surface d'appui de la surface d'appui de référence (11) dans le sens longitudinal du rail de guidage (2).

4. Gabarit de montage (1) selon l'une quelconque des revendications 1 à 3, **caractérisé en ce que** chaque dispositif de blocage (7) comporte plusieurs dispositifs de serrage, qui sont destinés à générer la force de serrage et qui sont disposés à distance les uns des autres, de préférence à même distance, dans le sens longitudinal de la surface d'appui de référence (11).

5. Gabarit de montage (1) selon l'une quelconque des revendications 1 à 4, **caractérisé en ce que** chaque dispositif de blocage (7) comporte une griffe de serrage (12), montée sur le corps de base (6) et munie d'une surface d'appui (13) pour le rail de guidage (2) associé, ladite griffe de serrage (12) étant munie de fentes (17), qui sont orientées perpendiculairement au sens longitudinal et sont réparties dans le sens longitudinal de la surface d'appui de référence (11) pour former des segments de griffe de serrage (18) juxtaposés, un dispositif de serrage étant en contact avec chaque segment de griffe de serrage (18).

6. Gabarit de montage (1) selon la revendication 5, **caractérisé en ce que** les fentes (17) sont ouvertes chacune au niveau de l'une de leurs extrémités.

7. Gabarit de montage (1) selon l'une quelconque des revendications 1 à 6, **caractérisé en ce que** le corps de base (6) a une rigidité plusieurs fois supérieure, à savoir cinquante à cent fois supérieure à celle des rails de guidage (2) à monter.

8. Gabarit de montage (1) selon l'une quelconque des revendications 1 à 7, **caractérisé en ce que** les dispositifs de blocage (7) sont montés chacun de manière pivotante sur le corps de base (6) par l'intermédiaire d'un arbre de pivotement (10).

9. Gabarit de montage (1) selon l'une quelconque des revendications 1 à 8, **caractérisé en ce que** les dispositifs de blocage (7) comportent chacun une pluralité d'orifices d'accès (22), qui sont réalisés en étant décalés par rapport à la position des dispositifs de serrage et, dans la position de fermeture, mènent en passant entre ceux-ci vers une surface (4) libre, non en appui contre le gabarit de montage, du rail de guidage (2) concerné.

10. Gabarit de montage (1) selon l'une quelconque des revendications 5 à 9, **caractérisé en ce que** chaque dispositif de serrage comporte un tirant d'ancrage (19), par lequel le segment de griffe de serrage (18) associé est relié au corps de base (6) et par l'intermédiaire duquel (19) ledit segment est bloqué avec le corps de base (6) pour générer la force de serrage.

11. Gabarit de montage (1) selon l'une quelconque des revendications 5 à 9, **caractérisé en ce que** deux dispositifs de blocage (7) sont prévus sur deux côtés opposés du gabarit de montage, et des segments de griffe de serrage (18) respectivement opposés des dispositifs de blocage (7) sont reliés entre eux au moyen d'un tirant d'ancrage (19), associé à chacun de ceux-ci, et sont bloqués l'un avec l'autre par l'intermédiaire du tirant d'ancrage (19) pour générer la force de serrage.

12. Gabarit de montage (1) selon la revendication 10 ou 11, **caractérisé en ce que** le tirant d'ancrage (19) est en appui contre le segment de griffe de serrage (18) par l'intermédiaire d'un élément de serrage (20) flexible du dispositif de serrage.

13. Gabarit de montage (1) selon la revendication 12, **caractérisé en ce que** l'élément de serrage flexible est un ressort de pression (20).

14. Gabarit de montage (1) selon l'une quelconque des revendications 10 à 13, **caractérisé en ce que** le tirant d'ancrage (19) est muni d'un dispositif de réglage (21) destiné à régler la précontrainte de l'élément de serrage (20) flexible.

15. Gabarit de montage (1) selon l'une quelconque des revendications 8 à 14, **caractérisé en ce que** chaque dispositif de blocage (7) est muni d'une poignée (23), qui est disposée par rapport à l'arbre de pivotement (10), de telle sorte qu'une traction au niveau de la poignée (23) entraîne une augmentation de la force de serrage du dispositif de blocage (7) contre les rails de guidage (2).

16. Gabarit de montage (1) selon l'une quelconque des revendications 8 à 15, **caractérisé en ce que** la griffe de serrage (12) est réalisée sous la forme d'un levier pivotant qui, sur un côté du gabarit de montage (1), s'avance en saillie latéralement au-dessus de la surface d'appui de référence (11) à une distance de cette dernière réalisée à cet emplacement, et au niveau de son extrémité en saillie revient en forme de U vers la surface d'appui de référence (11), sachant qu'au niveau de son extrémité libre, il forme la surface d'appui (13) qui est située en face de la surface d'appui de référence (11).
